# FASCICULE DE BREVET EUROPEEN

(11) **EP 2 053 255 B1**
(45) Date de publication et mention de la délivrance du brevet: **06.10.2010**
(21) Numéro de dépôt: 08167184.4
(22) Date de dépôt: 21.10.2008
(51) Int. Cl.: F16B 11/00

(54) **Dispositif structural d'amélioration de la tenue d'une structure aux dilatations en température**
Konstruktionsvorrichtung zur Verbesserung der Stabilität einer Struktur hinsichtlich temperaturbedingter Ausdehnungen
Structural device for improving the resistance of a structure to heat elongation

(30) Priorité: 23.10.2007 FR 0707420
(43) Date de publication de la demande: 29.04.2009
(73) Titulaire: THALES, 92200 Neuilly-sur-Seine (FR)
(72) Inventeur: Guillot, Nicolas, 06150, CANNES LA BOCCA (FR); Pommatau, Gilles, 06210, MANDELIEU (FR); Damiano, Olivier, 83600, LES ADRETS DE L'ESTEREL (FR)
(74) Mandataire: Esselin, Sophie

(56) Documents cités:
- US-A- 3 192 671
- US-A- 5 324 146

## Description

La présente invention concerne le domaine des dispositifs d'assemblage de panneaux, dont la surface est en composites à base de fibres de carbone, à partir de pièces d'attaches appelées également ferrures structurales d'attache. Plus particulièrement le dispositif selon l'invention concerne le domaine de l'assemblage de structures de satellite, pour des applications spatiales, dont les températures aux limites [-50°C, +80°C] imposent des dilatations thermiques des structures.

Actuellement, les structures des satellites destinés à stationner dans l'espace sont composées de panneaux sandwichs, dont les semelles sont généralement en carbone. Afin d'assembler ces panneaux, des pièces d'attache sont destinées à joindre et à fixer les panneaux les uns aux autres. Ces panneaux sont généralement assemblés de manière à réaliser un caisson ou une structure cloisonnée pouvant recevoir une charge utile.

Par exemple, une solution connue est réalisée à partir d'une pièce d'attache en aluminium comprenant deux faces planes parallèles entre lesquelles un panneau en composites à base de fibres de carbone est inséré et ensuite collé. La pièce d'attache peut être reliée ensuite à une autre pièce d'attache par une liaison vissée par exemple.

Les conditions dans l'espace, compte tenu des missions imposent aux structures des satellites des variations en température importantes. Généralement, on considère que la plage [-50°C, +80°C] est applicable à la plupart des missions de satellites géostationnaires de télécommunication.

Lors de ces variations de températures, les matériaux des structures subissent des dilatations et créent des efforts de résistances au niveau des jonctions des structures assemblées et plus particulièrement au niveau des joints de colle séparant un panneau d'une pièce d'attache. Les matériaux étant différents, les coefficients de dilatation, de l'ordre de 2·10⁻⁶ K⁻¹ pour le carbone et de l'ordre de 20·10⁻⁶ K⁻¹ pour l'aluminium, sont également différents et provoquent un cisaillement important au niveau de la colle à chaud et à froid.

Dans ces conditions, on considère que la diminution de la tenue des structures au niveau des pièces d'attache peut proche de40% à -50°C par rapport à l'ambiante compte tenu de la différence des coefficients de dilatation thermique de l'aluminium et du carbone.

En outre, les satellites actuels deviennent de plus en plus polyvalents et les missions peuvent être variées et diversifiées, ces raisons tendent à considérer une plage élargie de températures au niveau de la structure des satellites. La plage de température à prendre en compte étant de plus en plus large, les dangers potentiels de rupture des structures sont accrus.

Concernant ce type d'application, dans la pratique, une pièce d'attache est généralement collée à un panneau à partir d'au moins une surface plane préalablement usinée de manière à rendre solidaire la pièce d'attache avec le panneau. Les panneaux deviennent solidaires entre eux lorsque les pièces d'attache les joignent deux à deux.

Un des inconvénients d'un tel dispositif réside en ce que des matériaux ayant des coefficients de dilatation différents collés entre eux subissent des efforts importants essentiellement supportés par les joints de colle à basse et haute température.

Un risque encouru est la rupture prématurée du joint de colle, la rupture étant une conséquence d'une dilatation des matériaux provoquée par de nombreuses variations de températures sur une grande plage.

Dans ces conditions, pour pallier le danger de rupture, le renforcement des pièces d'attache implique de nombreuses difficultés de réalisation.

Une solution connue pour résoudre partiellement ce dernier inconvénient est l'utilisation de ferrures structurales d'attache en titane dont le coefficient de dilatation est plus proche de celui du carbone que l'est celui de l'aluminium.

En revanche cette solution présente les inconvénients d'être coûteuse, de rendre l'usinage de la pièce difficile et de rendre nécessaire un traitement des surfaces, celui-ci étant contraignant.

Une autre solution connue consiste à remplacer les ferrures structurales d'attache métalliques par des blocs de carbone stratifiés collés à chaud lors de la polymérisation des semelles sur le panneau.

Cette solution présente de nouveaux inconvénients. Notamment, le fluage important du carbone dans le sens perpendiculaire à celui des fibres, particulièrement à chaud, et la difficulté à réaliser une liaison vissée de deux panneaux complexifient la fabrication des dispositifs d'attache et des panneaux. Par ailleurs, cette solution oblige à figer les définitions détaillées de l'assemblage des panneaux très tôt dans le procédé de fabrication.

Le brevet américain US-A-3 192 671 décrit une structure d'assemblage pour panneau structural, comprenant toutes les caractéristiques du préambule de la revendication 1.

Un but de l'invention est de remédier à ces inconvénients. Le dispositif selon l'invention permet d'une part de disposer d'une pièce d'attache moulée et réalisée dans le même matériau ou proche de celui du panneau, notamment de la fibre de carbone, dont le coefficient de dilatation est faible, et de disposer dans la pièce moulée un insert métallique permettant de supporter le passage de charges mécaniques entre les panneaux de la structure. Cette solution présente l'avantage d'obtenir un mode de réalisation d'assemblages vissés et de transférer la charge supportée par les joints de colle au niveau de l'insert métallique inclus dans la ferrure en fibres ou faisceaux de fibres de carbone.

Avantageusement, la structure d'assemblage pour panneau structural comprend.
- un panneau rigide sensiblement plan ;
- au moins une pièce d'attache monobloc, réalisée par moulage, collée au panneau, la pièce d'attache comprenant :
   o au moins une première face plane, appelée « pelle », comprenant :
      ■ un évidemment pouvant recevoir une colle et ;
      ■ des rebords destinés à retenir la colle autour de l'évidement et au moins une ouverture ;
   o un barreau solidaire de la première face plane,

Selon l'invention telle que définie dans la revendication 1 indépendante de produit, la structure d'assemblage pour panneau structural est caractérisé en ce que :
o les matériaux de la pièce d'attache et du panneau sont en composite ;
o et que le barreau comprend un insert métallique dont le coefficient de dilatation est supérieur au matériau de la pièce d'attache, l'insert métallique étant positionné dans le moule lors du moulage de la pièce d'attache.

Avantageusement, la pièce d'attache est composée de faisceaux de fibres de carbone pré-imprégnés d'une résine thermodurcissable.

Avantageusement, l'insert métallique comprend un collet à l'intérieur du barreau empêchant l'extraction de l'insert.

Avantageusement, l'insert métallique comprend deux parties sensibles cylindriques, la partie de plus grand diamètre étant le collet.

Avantageusement, l'insert métallique est en aluminium.

Avantageusement, l'axe de l'insert métallique est dans le plan de la pelle de la pièce d'attache.

Avantageusement, la structure comprend une seconde pelle parallèle la première pelle et ayant les mêmes caractéristiques, les deux pelles étant solidaires du barreau, la distance entre les deux pelles correspondant sensiblement à l'épaisseur du panneau, la pièce d'attache formant une selle.

Avantageusement, les pelles comprennent chacune au moins trois ouvertures, dont l'une pouvant servir à insérer la colle dans l'évidemment des pelles et les deux autres étant des trous de positionnement.

Selon l'invention telle que définie dans la revendication 9 indépendante de procédé, le procédé de réalisation d'une structure d'assemblage pour panneau structural comporte :
- une première étape de compression à chaud de fibres de carbone imprégnées d'une résine thermodurcissable dans un moule comprenant un insert métallique, la pièce ainsi moulée étant appelée pièce d'attache et comprenant :
   o une première partie formée d'au moins une première face plane, appelée pelle, comprenant un évidement et au moins un trou traversant la pelle ;
   o une seconde partie formée d'un barreau solidaire de la première face plane comprenant l'insert métallique dont le coefficient de dilatation est supérieur à celui du composite ;
- une seconde étape de taraudage de l'insert métallique de manière à fileter le barreau de la pièce d'attache ;
- une troisième étape de collage de la première face plane de la pièce d'attache à un panneau structural dont les semelles sont en carbone.

Avantageusement, la première étape est réalisée à une température proche de 120°C.

Avantageusement, la première étape comprend la réalisation par moulage de deux autres trous traversant la pelle permettant de positionner la pièce d'attache sur le panneau, ce dernier comprenant des points de marquage, les trous étant appelés « trous de positionnement ».

Avantageusement, le sens de taraudage de l'insert métallique est dans le plan des pelles et dans un axe parallèle au sens de l'enfichage du panneau dans la pièce d'attache.

Avantageusement, une étape de réalisation de points de marquages sur la semelle du panneau comprend l'usinage de trous sur les semelles.

Avantageusement, la troisième étape est réalisée par l'introduction d'une colle dans l'évidement d'au moins une pelle par un trou traversant la pelle.

D'autres caractéristiques et avantages de l'invention apparaîtront à l'aide de la description qui suit, faite en regard des dessins annexés qui représentent :
- la figure 1A représente une vue 3D d'un mode de réalisation d'une pièce d'attache de l'invention ;
- la figure 1B représente une vue de coupe d'un mode de réalisation d'une pièce d'attache de l'invention ; ;
- la figure 2 représente une vue de coupe de l'assemblage d'une pièce d'attache et d'un panneau et du joint de colle ;
- la figure 3 représente la pièce d'attache et la pièce d'insert apte à coopérer avec une vis.
- La figure 4 représente un exemple schématique de 5 panneaux assemblés et des pièces d'attache les fixant ensemble.

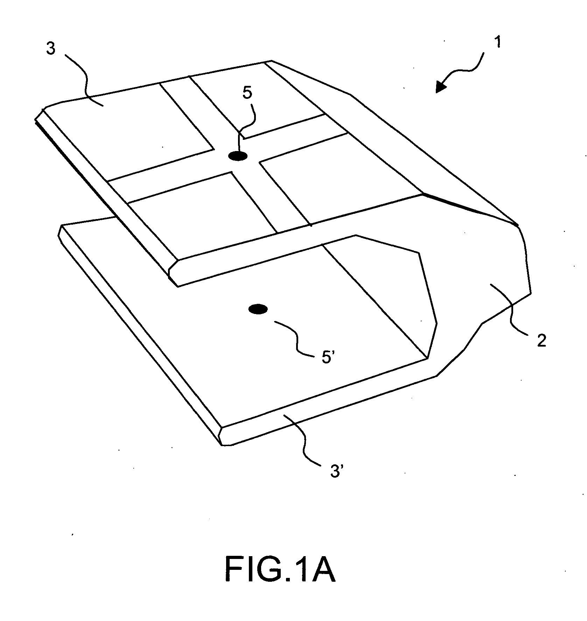

La figure 1A représente un cas de réalisation d'un moyen essentiel de l'invention représenté par la pièce d'attache 1. Celle-ci est moulée par compression à chaud dans un matériau composite tel que des faisceaux de fibres de carbone pré-imprégnés d'une résine thermodurcissable. La résine peut être par exemple de la résine epoxy. Pour ce faire un moule est réalisé pour la pièce d'attache.

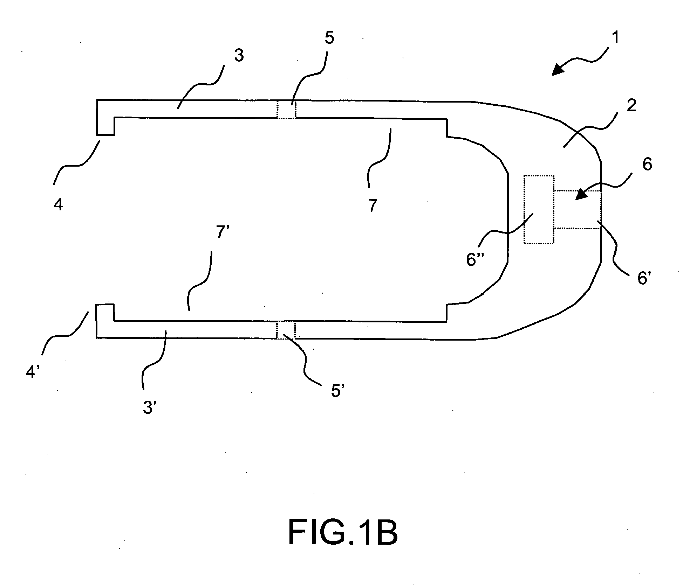

Dans la suite de la description on distingue deux parties fonctionnelles différentes de la pièce 1 d'attache monobloc. La première constitue le barreau 2 qui permet de fixer la pièce d'attache 1 à une autre pièce d'attache par l'intermédiaire d'une vis par exemple, et la seconde est composée, dans le cas de réalisation de la figure 1, de deux faces 3, 3' parallèles, encore appelées « pelles » dans le vocabulaire technique. Ces dernières permettent notamment de recevoir un panneau plan dont l'épaisseur est sensiblement égale à l'écart entre les deux faces.

Le moulage de la pièce d'attache est effectué à une température proche de 120°C de manière à rendre la matière à base de carbone molle et apte à prendre la forme du moule.

La cuisson s'effectue durant une durée proche de 5 minutes. Le moule comporte des parties saillantes permettant de réaliser des trous 5, 5' sur les pelles 3, 3' de la pièce d'attache 1. Les trous 5, 5' sont destinés à l'infiltration d'une colle sur les surfaces internes de la pièce d'attache 1.

La figure 1B représente une vue de coupe de la pièce d'attache 1. L'invention permet de mouler la pièce d'attache 1 en y insérant lors du moulage un insert métallique 6. L'insert métallique 6 peut avantageusement être en aluminium et se compose d'une première partie cylindrique 6' et d'une seconde partie formant un collet 6", les deux parties étant solidaires. Le collet 6" permet de maintenir l'insert à l'intérieur de la pièce d'attache 1 lors des transmissions d'efforts axiaux.

Dans son utilisation finale, l'insert est destiné à être taraudé afin de permettre de fixer une attache axiale au moyen d'une vis par exemple.

Dans un cas de réalisation privilégié, le collet 6" peut être de forme cylindrique également et concentrique à la première partie cylindrique 6'.

L'insert métallique est avantageusement positionné de telle manière que l'axe de la première partie cylindrique 6' de l'insert 6 est dans le pian des pelles 3, 3', l'axe de l'insert étant parallèle à la direction d'enfichage de la pièce d'attache sur un panneau. Afin d'optimiser la répartition des charges, l'insert métallique peut être centré sur la face externe du barreau.

Un avantage, pendant le moulage de la pièce d'attache lors de la compression à chaud à une température proche de 120°C, est que l'insert métallique dilaté permet d'introduire lors du refroidissement un faible jeu entre l'insert métallique et la pièce d'attache. Ce jeu permet lors des dilatations dans un environnement à des températures comprises dans la plage [-50°C, +80°C] de ne pas introduire d'efforts supplémentaires sur la pièce d'attache dus à la dilatation thermique de l'insert métallique.

Par ailleurs, les pelles 3, 3' internes de la pièce 1 comprennent, chacune, un évidement 7, 7'. Cet évidement 7, 7' permet de recevoir la colle lors de son introduction par les orifices 5, 5' lorsque le panneau est inséré entre les pelles 3, 3'.

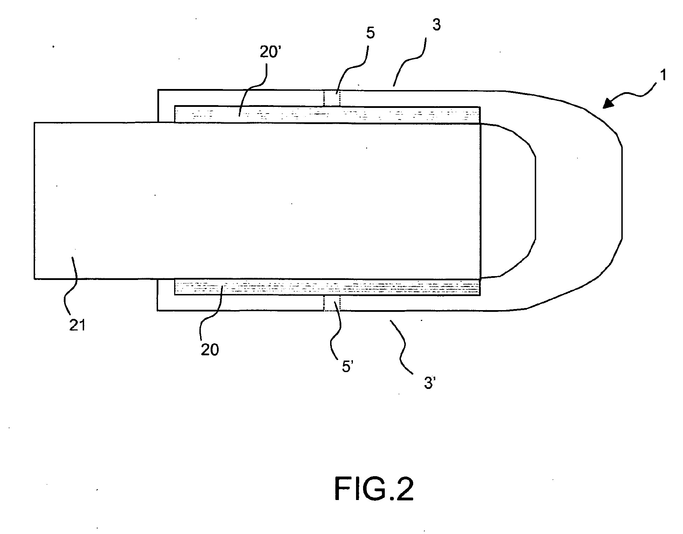

La figure 2 représente un dispositif structural selon l'invention comprenant la pièce d'attache 1, un panneau 21, celui-ci comprenant une semelle supérieure et une semelle inférieure, et une colle 20, 20' insérée par les orifices 5, 5'. Le panneau 21 est inséré entre les deux pelles 3, 3' de la pièce d'attache 1. La colle est injectée par les orifices 5, 5' et est recueillie dans les évidements 7, 7'.

Le panneau 21 est alors maintenu dans la pièce 1 par adhésion des faces de la pièce d'attache 1 et des semelles du panneau.

Un exemple de panneau structural pour satellite selon l'invention peut être composé de deux semelles de carbones extérieures destinées à être collés sur les faces internes de la pièce d'attache 1 et d'une structure de nid d'abeille à l'intérieur du panneau.

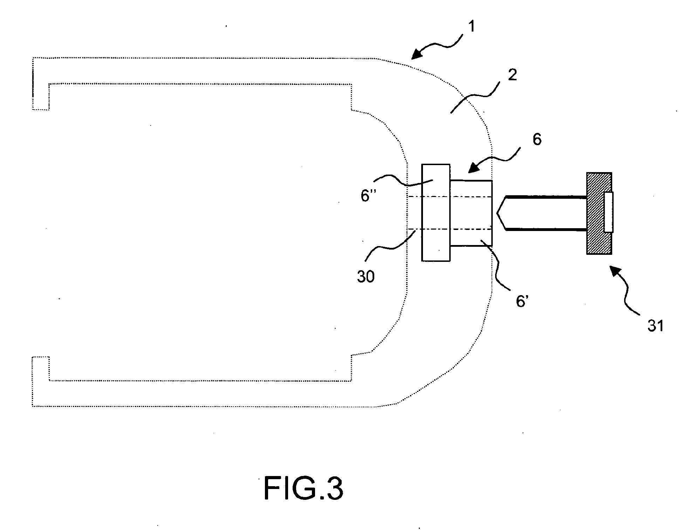

La figure 3 représente la pièce d'attache 1 ainsi que l'insert 6 dans le barreau 2. L'insert 6 dans son usinage final est taraudé et présente un filetage 30 apte à recevoir une vis 31.

Le principal avantage d'un tel dispositif consiste en la réduction des efforts sur le joint de colle étant donné les coefficients de dilatation sensiblement proche des semelles carbone des panneaux et des pièces d'attache composées de faisceaux de fibres de carbone imprégnés d'une résine thermodurcissable.

Un avantage d'une telle solution réside dans la simplification du procédé de collage dû à la géométrie de la pièce d'attache. Par ailleurs, les surfaces destinées à être collées de la pièce d'attache ne nécessitent pas de traitement spécifique avant collage. En outre, les coûts de fabrication sont faibles par rapport à la réalisation de pièces d'attache en titane.

Un autre avantage est la bonne tenue de la liaison vissée axiale supportée par l'insert, celui-ci étant positionné et maintenu dans la pièce d'attache dès le moulage.

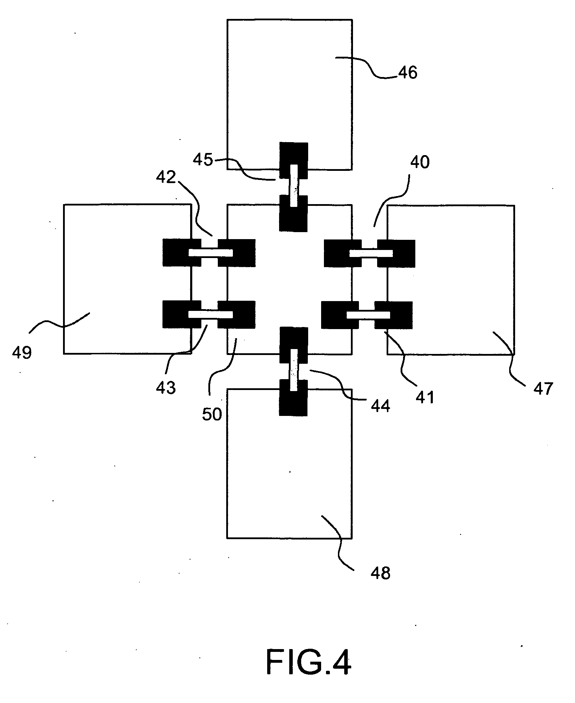

La figure 4 représente un exemple d'assemblage de 5 panneaux structuraux 46, 47, 48, 49, 50 maintenus ensembles par des pièces attaches, telles que décrites précédemment, fixées entre elles et formant des doubles attaches axiales 40, 41, 42, 43, 44, 45.

Cet exemple est illustré à titre indicatif afin d'illustrer un cas d'assemblage de plusieurs panneaux structuraux.

Un autre mode de réalisation du dispositif structural selon l'invention est d'obtenir une pièce moulée ne comportant qu'une seule face, c'est à dire comportant une seule pelle. Le principe de collage entre la pelle de la pièce d'attache et la semelle du panneau reste le même que celui décrit précédemment.

Un autre mode de réalisation consiste à disposer de pelles de la pièce d'attache 1 comportant plusieurs trous ou orifices. Par exemple, le moulage de la pièce d'attache 1 permet à partir du moule d'insérer trois trous sur chacune des pelles.

Dans ce mode de réalisation, sur chacune des pelles de la pièce d'attache 1, un trou est destiné à l'insertion de la colle dans l'évidemment et les deux autres trous permettent de positionner les pelles sur le panneau au moyen de marquages préalablement situés sur le panneau. Avantageusement les marquages peuvent être des trous de manière à faire un contrôle de positionnement des pelles sur les semelles du panneau en insérant un axe dans les deux trous des chacune des pelles.

Dans ce dernier cas, les trous, respectivement des pelles et des semelles, peuvent être superposés et maintenus par un insert cylindrique axial pendant le collage de la pièce d'attache et du panneau et retiré ensuite par exemple.

La structure selon l'invention ne se limite pas au domaine d'application [-50°, +80°] mais peut avantageusement résister au delà de ces limites, notamment dans une plus large plage de températures allant de -180° à +200°.

## Revendications

1. Structure d'assemblage pour panneau structural comprenant :
• un panneau rigide (21) sensiblement plan ;
• au moins une pièce d'attache (1) monobloc, réalisée par moulage, collée au panneau (21), la pièce d'attache (1) comprenant :
○ au moins une première face plane, appelée « pelle » (3, 3'), comprenant :
■ un évidement (7, 7') pouvant recevoir une colle (20, 20') et ;
■ des rebords (4, 4') destinés à retenir la colle autour de l'évidement et au moins une ouverture ;
○ un barreau (2) solidaire de la première face plane, **caractérisé en ce que** :
○ les matériaux de la pièce d'attache (1) et du panneau (21) sont en composite ;
○ et que le barreau (2) comprend un insert métallique (6) dont le coefficient de dilatation est supérieur au matériau de la pièce d'attache (1), l'insert métallique (6) étant positionné dans le moule lors du moulage de la pièce d'attacher (1).

2. Structure selon la revendication 1, **caractérisée en ce que** la pièce d'attache (1) est composée de faisceaux de fibres de carbone pré-imprégnés d'une résine thermodurcissable.

3. Structure selon l'une des revendications 1 à 2, **caractérisée en ce que** l'insert métallique (6) comprend un collet à l'intérieur du barreau (2) empêchant l'extraction de l'insert.

4. Structure selon l'une des revendications 1 à 3, **caractérisée en ce que** l'insert métallique (6) comprend deux parties sensibles cylindriques, la partie de plus grand diamètre étant le collet.

5. Structure selon l'une des revendications 1 à 4, **caractérisée en ce que** l'insert métallique (6) est en aluminium.

6. Structure selon l'une des revendications 1 à 5, **caractérisée en ce que** l'axe de l'insert métallique (6) est dans le plan de la pelle (3, 3') de la pièce d'attache (1).

7. Structure selon l'une des revendications 1 à 6, **caractérisée en ce qu'**elle comprend une seconde pelle parallèle la première pelle (3, 3') et ayant les mêmes caractéristiques, les deux pelles étant solidaires du barreau (2), la distance entre les deux pelles correspondant sensiblement à l'épaisseur du panneau, la pièce d'attache (1) formant une selle.

8. Structure selon la revendication 7, **caractérisée en ce que** les pelles comprennent chacune au moins trois ouvertures, dont l'une pouvant servir à insérer la colle (20, 20') dans l'évidement (7, 7') des pelles et les deux autres étant des trous de positionnement.

9. Procédé de réalisation d'une structure d'assemblage pour panneau structural, **caractérisé en ce que** qu'il comporte :
• une première étape de compression à chaud de fibres de carbone imprégnées d'une résine thermodurcissable dans un moule comprenant un insert métallique (6), la pièce ainsi moulée étant appelée pièce d'attaché (1) et comprenant :
o une première partie formée d'au moins une première, face plane, appelée pelle (3, 3'), comprenant un évidement (7, 7') et au moins un trou traversant la pelle ;
o une seconde partie formée d'un barreau (2) solidaire de la première face plane comprenant l'insert métallique (6) dont le coefficient de dilatation est supérieur à celui du composite ;
• une seconde étape de taraudage de l'insert métallique (6) de manière à fileter le barreau (2) de la pièce d'attache (1);
• une troisième étape de collage de la première face plane de la pièce d'attache (1) à un panneau structural dont les semelles sont en carbone.

10. Procédé de réalisation d'une structure selon la revendication 9, **caractérisé en ce que** la première étape est réalisée à une température proche de 120°C.

11. Procédé de réalisation d'une structure selon la revendication 9, **caractérisé en ce que** la première étape comprend la réalisation par moulage de deux autres trous traversant la pelle permettant de positionner la pièce d'attache (1) sur le panneau, ce dernier comprenant des points de marquage, les trous étant appelés « trous de positionnement ».

12. Procédé de réalisation d'une structure selon la revendication 9, **caractérisé en ce que** le sens de taraudage de l'insert métallique (6) est dans le plan des pelles et dans un axe parallèle au sens de l'enfichage du panneau dans la pièce d'attache (1).

13. Procédé de réalisation d'une structure selon la revendication 9, **caractérisé en ce qu'**une étape de réalisation de points de marquages sur la semelle du panneau comprend l'usinage de trous sur les semelles.

14. Procédé de réalisation d'une structure selon la revendication 9, **caractérisé en ce que** la troisième étape est réalisée par l'introduction d'une colle (20, 20') dans l'évidement (7, 7') d'au moins une pelle par un trou traversant la pelle.

## Claims

1. Structural panel assembly structure comprising:
- a rigid, substantially planar panel (21);
- at least one one-piece attachment part (1), produced by moulding, glued to the panel (21), the attachment part (1) comprising:
- at least a first planar face, known as a "blade" (3, 3'), comprising:
- a recess (7, 7') capable of receiving a glue (20, 20'); and
- rims (4, 4') intended to retain the glue around the recess and at least one opening;
- a bar (2) fixed to the first planar face;
**characterised in that**:
- the materials of the attachment part (1) and the panel (21) are composite materials; and
- the bar (2) comprises a metal insert (6) of which the expansion ratio is greater than that of the material of the attachment part (1), the metal insert (6) being positioned in the mould when the attachment part (1) is moulded.

2. Structure according to claim 1, **characterised in that** the attachment part (1) is made of bundles of carbon fibres pre-impregnated with a thermosetting resin.

3. Structure according to either of claims 1 to 2, **characterised in that** the metal insert (6) comprises a flange inside the bar (2) preventing extraction of the insert.

4. Structure according to any one of claims 1 to 3, **characterised in that** the metal insert (6) comprises two substantially cylindrical parts, the part of greater diameter being the flange.

5. Structure according to any one of claims 1 to 4, **characterised in that** the metal insert (6) is made of aluminium.

6. Structure according to any one of claims 1 to 5, **characterised in that** the axis of the metal insert (6) is in the plane of the blade (3, 3') of the attachment part (1).

7. Structure according to any one of claims 1 to 6, **characterised in that** it comprises a second blade parallel to the first blade (3, 3') and having the same features, both blades being fixed to the bar (2), the distance between the two blades substantially corresponding to the thickness of the panel, the attachment part (1) forming a saddle.

8. Structure according to claim 7, **characterised in that** the blades each comprise at least three openings, of which one can be used to insert the glue (20, 20') into the recess (7, 7') of the blades and the other two are positioning holes.

9. Method for producing a structural panel assembly structure, **characterised in that** it comprises:
- a first step of hot compression of carbon fibres impregnated with a thermosetting resin in a mould comprising a metal insert (6), the part moulded in this way being known as an attachment part (1) and comprising:
- a first part formed of at least one first planar face, known as a blade (3, 3'), comprising a recess (7, 7') and at least one hole through the blade;
- a second part formed of a bar (2) fixed to the first planar face comprising the metal insert (6) of which the expansion ratio is greater than that of the composite material;
- a second step of threading the metal insert (6) in such a way as to tap the bar (2) of the attachment part (1);
- a third step of gluing the first planar face of the attachment part (1) to a structural panel of which the skins are made of carbon.

10. Method for producing a structure according to claim 9, **characterised in that** the first step is carried out at a temperature close to 120 °C.

11. Method for producing a structure according to claim 9, **characterised in that** the first step comprises the production by moulding of two other holes through the blade making it possible to position the attachment part (1) on the panel, which comprises marking points, the holes being known as "positioning holes".

12. Method for producing a structure according to claim 9, **characterised in that** the threading direction of the metal insert (6) is in the plane of the blades and in an axis parallel to the direction of the insertion of the panel into the attachment part (1).

13. Method for producing a structure according to claim 9, **characterised in that** a step of producing marking points on the skin of the panel comprises machining holes in the skins.

14. Method for producing a structure according to claim 9, **characterised in that** the third step is carried out by introducing a glue (20, 20') into the recess (7, 7') of at least one blade via a hole through the blade.

## Patentansprüche

1. Montagestruktur für eine Strukturplatte, die Folgendes umfasst:
- eine im Wesentlichen ebene starre Platte (21);
- wenigstens ein einstückiges Befestigungsteil (1), das durch Formen hergestellt und auf die Platte geklebt (21) wird, wobei das Befestigungsteil (1) Folgendes umfasst:
- wenigstens eine erste ebene Fläche, "Schaufel" (3, 3') genannt, die Folgendes umfasst:
- eine Aussparung (7, 7') zur Aufnahme eines Klebstoffs (20, 20') und
- Vorsprünge (4, 4') mit der Aufgabe, den Klebstoff um die Aussparung herum festzuhalten, und wenigstens eine Öffnung;
- einen Steg (2) aus einem Stück mit der ersten ebenen Fläche,
**dadurch gekennzeichnet, dass**:
- die Befestigungsteile (1) und die Platte (21) aus einem Verbundstoff gefertigt sind;
- und **dadurch**, dass der Steg (2) einen metallischen Einsatz (6) umfasst, dessen Ausdehnungskoeffizient größer ist als der des Materials des Befestigungsteils (1), wobei der metallische Einsatz (6) beim Formen des Befestigungsteils (1) in der Form positioniert ist.

2. Struktur nach Anspruch 1, **dadurch gekennzeichnet, dass** das Befestigungsteil (1) aus Kohlefaserbündeln gefertigt ist, die mit einem wärmehärtbaren Harz imprägniert sind.

3. Struktur nach einem der Ansprüche 1 bis 2, **dadurch gekennzeichnet, dass** der metallische Einsatz (6) einen Bund im Innern des Stegs (2) aufweist, der ein Herausziehen des Einsatzes verhindert.

4. Struktur nach einem der Ansprüche 1 bis 3, **dadurch gekennzeichnet, dass** der metallische Einsatz (6) zwei empfindliche zylindrische Teile umfasst, wobei der Teil mit dem größeren Durchmesser der Bund ist.

5. Struktur nach einem der Ansprüche 1 bis 4, **dadurch gekennzeichnet, dass** der metallische Einsatz (6) aus Aluminium ist.

6. Struktur nach einem der Ansprüche 1 bis 5, **dadurch gekennzeichnet, dass** die Achse des metallischen Einsatzes (6) in der Ebene der Schaufel (3, 3') des Befestigungsteils (1) liegt.

7. Struktur nach einem der Ansprüche 1 bis 6, **dadurch gekennzeichnet, dass** sie eine zweite parallele Schaufel parallel zu der ersten Schaufel (3, 3') und mit denselben Eigenschaften umfasst, wobei die beiden Schaufeln aus einem Stück mit dem Steg (2) sind, wobei der Abstand zwischen den beiden Schaufeln im Wesentlichen der Dicke der Platte entspricht, wobei das Befestigungsteil (1) einen Sattel bildet.

8. Struktur nach Anspruch 7, **dadurch gekennzeichnet, dass** die Schaufeln jeweils wenigstens drei Öffnungen aufweisen, von denen eine dazu dienen kann, den Klebstoff (20, 20') in die Aussparung (7, 7') der Schaufeln einzuführen, und wobei die beiden anderen Positionierungslöcher sind.

9. Verfahren zur Herstellung einer Montagestruktur für eine Strukturplatte, **dadurch gekennzeichnet, dass** es Folgendes beinhaltet:
- einen ersten Schritt zum Warmpressen von Kohlefasern, die mit einem wärmehärtbaren Harz in einer Form imprägniert sind, die einen metallischen Einsatz (6) umfasst, wobei das so geformte Teil als Befestigungsteil (1) bezeichnet wird und Folgendes umfasst:
- einen ersten Teil, der aus wenigstens einer ersten ebenen Fläche gebildet ist, Schaufel (3, 3') genannt, die eine Aussparung (7, 7') und wenigstens ein die Schaufel durchquerendes Loch umfasst;
- einen zweiten Teil, der von einem Steg (2) gebildet wird, der aus einem Stück mit der ersten ebenen Fläche ist und den metallischen Einsatz (6) aufweist, dessen Ausdehnungskoeffizient größer ist als der des Verbundstoffs;
- einen zweiten Schritt des Schneidens eines Gewindes in dem metallischen Einsatz (6), um in dem Steg (2) des Befestigungsteils (1) ein Gewinde zu erzeugen;
- einen dritten Schritt des Klebens der ersten ebenen Fläche des Befestigungsteils (1) auf eine Strukturplatte, deren Sohlen aus Kohlenstoff bestehen.

10. Verfahren zur Herstellung einer Struktur nach Anspruch 9, **dadurch gekennzeichnet, dass** der erste Schritt bei einer Temperatur nahe 120°C ausgeführt wird.

11. Verfahren zur Herstellung einer Struktur nach Anspruch 9, **dadurch gekennzeichnet, dass** der erste Schritt die Herstellung durch Formen von zwei weiteren Löchern umfasst, die die Schaufel durchqueren, so dass das Befestigungsteil (1) auf der Platte positioniert werden kann, wobei Letztere Markierungspunkte aufweist, wobei die Löcher "Positionierungslöcher" genannt werden.

12. Verfahren zur Herstellung einer Struktur nach Anspruch 9, **dadurch gekennzeichnet, dass** die Richtung des Gewindes des metallischen Einsatzes (6) in der Ebene der Schaufeln und in einer Achse parallel zur Richtung des Einsteckens der Platte in das Befestigungsteil (1) ist.

13. Verfahren zur Herstellung einer Struktur nach Anspruch 9, **dadurch gekennzeichnet, dass** ein Schritt des Herstellens von Markierungspunkten auf der Sohle der Platte das Einarbeiten von Löchern in den Sohlen beinhaltet.

14. Verfahren zur Herstellung einer Struktur nach Anspruch 9, **dadurch gekennzeichnet, dass** der dritte Schritt durch Einleiten eines Klebstoffs (20, 20') in die Aussparung (7, 7') von wenigstens einer Schaufel durch ein die Schaufel durchquerendes Loch ausgeführt wird.
